# EUROPEAN PATENT APPLICATION

(11) **EP 0 943 898 A2**
(43) Date of publication of application: **22.09.1999**
(21) Application number: 99105515.3
(22) Date of filing: 17.03.1999
(51) Int. Cl.: G01F 1/06

(54) **Gear train for water meters**

(30) Priority: 20.03.1998 IT UD980047
(71) Applicant: Maddalena Srl, 33040 Grions Del Torre - Povoletto (UD) (IT)
(72) Inventor: Maddalena, Franco, 33100 Udine (IT)
(74) Representative: Petraz, Gilberto Luigi

(57) **Abstract**

Gear train for water meters of the type used in residential dwellings to monitor consumption, the meters comprising a measuring mechanism (11), such as a turbine, a swivel, a volumetric chamber or similar, arranged in the conduit (15) through which the liquid, such as water or similar, which is to be measured flows, an anchor pin (16) made to rotate by the measuring mechanism (11) due to magnetic attraction, a gear train to transmit motion and a drum (13) supporting the rollers (24) displaying the amount consumed, the gear train (10) comprising only two toothed wheels (25, 27), the first (25) receiving the rotation motion from the anchor pin (16) and transmitting it to the second (27), which transmits motion to the first (124) roller of the group of rollers (24) mounted on the drum (13).

## Description

### FIELD OF THE INVENTION

This invention concerns a gear train for water meters as set forth in the main claim.

To be more exact, the invention is applied in the production of meters used to measure water or other liquid, for example of the type used in homes to measure and display the amount consumed.

### BACKGROUND OF THE INVENTION

The state of the art includes the general structure of water meters to monitor and measure consumption.

Such meters are installed along the pipe which feeds the liquid and comprise a measuring mechanism, such as a turbine, a swivel, a volumetric chamber or similar, which is made to rotate by the liquid passing through the pipe. A drive magnet is associated to the measuring mechanism, and a driven magnet, facing the drive magnet, is made to rotate by the drive magnet due to magnetic attraction. The driven magnet is solid with an anchor pin whose axis of rotation substantially coincides with the axis of rotation of the turbine element.

The anchor pin, by means of a kinematic chain with gears, drives the rollers which display the consumption data.

In the state of the art, given the requirements and constraints of the reduction mechanisms in the transmission of the rotation motion from the anchor pin to the rollers carried by the display drum, the kinematic chain comprises at least three reduction gears.

The third wheel of the kinematic chain normally has signalling means to indicate the value of the size immediately below the size indicated by the first roller mounted on the drum.

In other words, if the progressive clicks of the first roller indicate the litres consumed, the third wheel has means to indicate the decilitres.

Normally, the indicating figures or symbols are made fixed on the shell which contains the mechanism and a consumption indicator is made on the outer face of the third wheel, which must therefore rotate in a clockwise direction, according to international law, so as to be seen by the authorised staff.

The first or the second wheel of the kinematic chain has an indicator such as a notch, a mark or similar which shows that a movement has taken place, even a minimum movement, due to a sudden flow of water in the pipe.

One disadvantage of this configuration in the state of the art is the high cost of the gear train due to the presence of three different elements.

Another disadvantage is the high loss of performance in the transmission of motion both because of the multiplication of the play from one wheel to the next, and also because of the increased friction due to the high number of transmission elements.

A further disadvantage is that the fixed positioning of the indication values, with the indicator of consumption located on the wheel, does not allow the user to identify them accurately.

Another disadvantage is that although the marks or notches on the first or second wheel allow to perceive the movement, they often do not allow to distinguish if this movement is due to a flow in the correct direction or to a return movement of the liquid in the pipes, which is forbidden by the law.

The present Applicant has devised and embodied this invention to overcome the shortcomings of the state of the art with a functional, economical and practical solution.

### SUMMARY OF THE INVENTION

The invention is set forth and characterised in the main claim, while the dependent claims describe other characteristics of the main embodiment.

The purposes of the invention are to reduce the overall cost of the kinematic chain which transmits rotation motion to the display roller, to increase the efficiency of the motion transmission and to increase efficacity in displaying the indication of consumption by the last wheel of the chain.

Another purpose is to make it easier to perceive the display of a sudden passage of water, and to facilitate the perception of the direction of that passage, whether it be from the pipes to the tap or vice versa.

According to the invention, the gear train comprises only two toothed wheels which transmit motion from the anchor pin to the drum bearing the rollers which display consumption.

To obtain the desired and necessary reduction in revolutions between the rotation motion of the anchor pin and the display rollers with only two wheels, the invention uses module gears similar to that used in the field of watchmaking, never used in a field such as meters.

In one embodiment of the invention, to adopt a solution which can be achieved mechanically without excessively reducing the size of the teeth of the wheels, each revolution of the second wheel corresponds to a fifth of a complete revolution, corresponding to 10 litres, of the first roller on the drum, that is to say, it requires half a revolution of the second wheel to make the roller do a rotation corresponding to a litre consumed.

According to the invention, the fractions of a litre are obtained by providing a window equipped with a fixed indicator, while the data concerning the tenths of a litre are impressed on the outer face of the second wheel.

This is also because the second wheel turns in an anti-clockwise direction.

According to the invention, on the outer face of the first wheel there are marks indicating the sudden passage of a flow of liquid; these marks also indicate the direction of flow, that is, whether it is from the pipes towards the tap or vice versa.

In a preferential embodiment, the signs are shaped like arrows arranged on a circumference; this solution supplies an immediate and reliable perception of the direction of rotation of the first wheel.

### BRIEF DESCRIPTION OF THE DRAWINGS

The attached Figures are given as a non-restrictive example and show a preferential embodiment of the invention, wherein:
Fig. 1 is an exploded view of the components of the meter adopting the gear train according to the invention;
Fig. 2 shows the gear train according to the invention in diagram form;
Fig. 3 is a front view of the first wheel of the gear train according to the invention;
Fig. 4 is a view from above of the meter which displays the indication of the second wheel of the gear train according to the invention.

### DETAILED DESCRIPTION OF PREFERRED EMBODIMENT

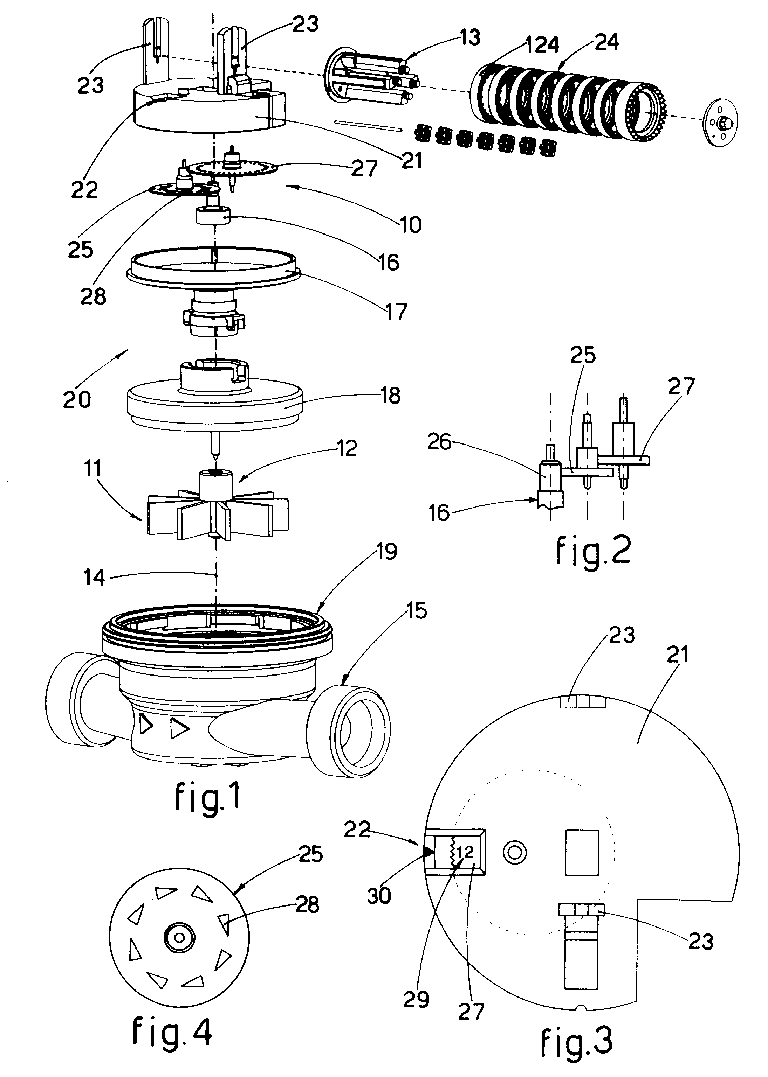

Fig. 1 shows the main components of a meter 20 of the turbine type for water or other liquids, and more particularly a turbine element 11 installed in the annular body 19 comprising the connections 15 to the pipe through which the liquid flows, an anchor pin 16 which transmits the rotation motion, a gear train 10 and a drum unit 13 on which the rollers 24 displaying the consumption data are mounted.

The anchor pin 16 is made to rotate, with an axis of rotation 14, due to the magnetic attraction exerted by a drive magnet 12 associated solidly with the turbine element 11.

The association between the annular body 19 and the turbine element 11 is made by a pair of disk elements 17 and 18, associated solidly to each other, which are inserted inside the annular body 19.

Above the gear train 10 there is a disk-type supporting element 21 equipped with at least a display window 22. The fins 23 to mount the drum unit 13 are made on the disk-type element 21.

The drum unit 13 is then covered by a transparent cover (not shown here) which allows to display the indication values on the rollers 24.

The gear train 10 consists of only two wheels of the type normally used in the field of watchmaking, a first wheel 25 made to rotate by the teething 26 on the upper part of the anchor pin 16, and a second wheel 27 which makes the roller-bearing drum 13 rotate.

On its outer face the first wheel 25 carries a plurality of indicating marks 28, configured, in this case, as arrows arranged on one circumference and facing in the same direction (Fig. 4).

The arrows 28 can be made by making holes on the surface, or drawn or engraved on the surface.

This conformation of the indicating marks 28 allows to have an immediate perception of a sudden movement of a flow of liquid in the pipe, and to recognise the direction thereof immediately.

On the outer face of the second wheel 27, which rotates in an anti-clockwise direction because it is the opposite direction of rotation to that induced by the turbine element 11, there are consumption indication values 29 of a size immediately below that indicated by the first roller 124.

These indication values 29 are visible through the window 22 on the supporting element 21 and are shown by the stationary indication element 30 associated with the window 22.

In the preferential embodiment, a half turn of the second wheel 27 is needed to obtain a rotation of the first roller 124 corresponding to a litre consumed.

This is in order not to reduce to excessively reduced dimensions the teeth of the two wheels 25 and 27.

## Claims

1. Gear train for water meters of the type used in residential dwellings to monitor consumption, the meters comprising a measuring mechanism (11), such as a turbine, a swivel, a volumetric chamber or similar, arranged in the conduit (15) through which the liquid, such as water or similar, which is to be measured flows, an anchor pin (16) made to rotate by the measuring mechanism (11) due to magnetic attraction, a gear train (10) to transmit motion and a drum (13) supporting the rollers (24) displaying the amount consumed, the gear train (10) being characterised in that it comprises only two toothed wheels (25, 27), the first (25) receiving the rotation motion from the anchor pin (16) and transmitting it to the second (27), which transmits motion to the first (124) roller of the group of rollers (24) mounted on the drum (13).

2. Gear train as in Claim 1, characterised in that the toothed wheels (25, 27) are of the type used in the watchmaking field.

3. Gear train as in Claim 1 or 2, characterised in that on the outer face of the second toothed wheel (27) there are consumption indication values (29) of a size less than those displayed on the first roller (124).

4. Gear train as in any claim hereinbefore, characterised in that the second toothed wheel (27) rotates in an anti-clockwise direction and cooperates with a display window (22) associated with a stationary indication element (30).

5. Gear train as in any claim hereinbefore, characterised in that on the outer face of the first toothed wheel (25) there are marks (28) indicating the sudden passage of liquid, the marks being configured as arrows to indicate the direction of rotation.
